# EUROPÄISCHE PATENTSCHRIFT

(11) **EP 1 688 279 B1**
(45) Veröffentlichungstag und Bekanntmachung des Hinweises auf die Patenterteilung: **27.05.2009**
(21) Anmeldenummer: 06000780.4
(22) Anmeldetag: 14.01.2006
(51) Int. Cl.: B60G 7/00

(54) **Lenkerbauteil für Radaufhängungen von Kraftfahrzeugen und Verfahren zu seiner Herstellung**
Suspension arm for motor vehicle and process for its manufacture
Bras de suspension pour véhicule automobile et procédé pour sa fabrication

(30) Priorität: 02.02.2005 DE 102005004917
(43) Veröffentlichungstag der Anmeldung: 09.08.2006
(73) Patentinhaber: Benteler Automobiltechnik GmbH, 33104 Paderborn (DE)
(72) Erfinder: Streubel, Wolfgang, 32756 Detmold (DE); Zuber, Armin, 74909 Meckesheim (DE); Linnig, Wolfram, 33100 Paderborn (DE)
(74) Vertreter: Griepenstroh, Jörg

(56) Entgegenhaltungen:
- DE-A1- 3 839 855
- DE-A1- 10 149 522
- DE-A1- 10 155 490
- DE-A1- 10 202 043

## Beschreibung

Die Erfindung betrifft ein Verfahren zur Herstellung eines Lenkerbauteils für Radaufhängungen von Kraftfahrzeugen gemäß den Maßnahmen im Oberbegriff des Patentanspruchs 1 sowie ein Lenkerbauteil gemäß den Merkmalen im Patentanspruch 7.

Durch die DE 38 39 855 A1 ist ein Leichtbauteil bekannt, bei welchem ein dreidimensionaler schalenförmiger Grundkörper in seinem Innenraum Verstärkungsrippen aus angespritztem Kunststoff aufweist. An den Verbindungsstellen zwischen Grundkörper und Verstärkungsrippen der Grundkörper sind Verankerungen vorgesehen. Auf diese Weise kann die Knickstabilität des Grundkörpers aus Stahlblech sowie die Torsionssteifigkeit gesteigert werden.

Durch die DE 101 55 490 A1 zählt eine Kraftverbindungsstrebe zum Stand der Technik. Die Kraftverbindungsstrebe eines Fahrwerks eines Personen- oder Nutzkraftwagens zur kraftschlüssigen Verbindung zwischen einem Chassis und einem Radträger, vorzugsweise einer Achsstrebe oder eines Fahrwerkslenkers, besteht aus einem länglichen Grundkörper und mindestens zwei endseitigen Lageraufnahmen zur Ein- und Ausleitung von Kräften. Der Grundkörper ist aus mehreren Elementen aus Kunststoff und Metall zusammengesetzt, wobei die Verbindung zwischen Metallelementen und Kunststoffelementen durch eine Umformung des Teils der Kunststoffelemente bewirkt wird.

Ein Kunststoff-Metall-Verbundbauteil für Rahmenkonstruktionen ist Gegenstand der DE 101 49 522 A1. Das Verbundbauteil besteht aus mindestens drei Profilen, bei denen jeweils zwei Profile mit einem freien Ende an ein weiteres anderes Profil angrenzen oder ineinander eintauchen, wobei im Bereich der Anschlussstelle der Profile mindestens ein Verstärkungselement angebracht ist, das einen Formschluss mit den Profilen bildet, und wobei die Profile durch im Bereich der Anschlussstelle angespritzten thermoplastischen Kunststoff miteinander verbunden sind. Die Profile weisen endständig Ausbuchtungen auf, die von dem Verstärkungselement umfasst sind.

Fahrwerkskomponenten, wie Vorder- und Hinterachsträger, Verbundlenkerachsen, Querlenker usw. werden neben Leichtmetallwerkstoffen üblicherweise aus Stahlwerkstoffen hergestellt, die über eine ausreichende Duktilität verfügen müssen, um die erforderlichen Umformungen für die angestrebten strukturellen Endformen realisieren zu können. Hohe Duktilitäten in den relevanten Verarbeitungszuständen stehen jedoch im Widerspruch zu den angestrebten möglichst hohen mechanischen Festigkeiten. Hochfeste Werkstoffe sind geeignet, das Gewicht der Fahrwerkskomponenten zu reduzieren, was sich wiederum positiv auf den Kraftstoffverbrauch eines Kraftfahrzeugs auswirkt als auch den Fahrkomfort verbessert, da ungefederte Fahrwerksmassen reduziert werden.

Um das Gewicht der Fahrwerkskomponenten so weit wie möglich zu reduzieren, wird grundsätzlich angestrebt, Stahlwerkstoffe mit möglichst hohen Festigkeiten einzusetzen. Dabei tritt jedoch das Problem auf, dass Stahlwerkstoffe sehr hoher Festigkeiten infolge ihrer im wesentlichen proportional geringeren Duktilität nur sehr schwer umformtechnisch verarbeitbar sind und zusätzliche aufwendige thermische Verarbeitungsstufen erforderlich machen, um die notwendige Umformduktilität zu erzielen. Teilweise können spezielle hoch- und höchstfeste Werkstoffe mit Zugfestigkeiten von über 800 MPa nur in einem weichen Anlieferungszustand, der nach dem Umformen eine spezielle thermische Härtung erfordert, oder in einem hoch erwärmten Zustand mit anschließender Endhärtung in die strukturelle Endform gebracht werden, in welcher das Bauteil schließlich die gewünschten hochfesten Eigenschaften besitzt. Diese zusätzlichen technologischen Aufwendungen wirken sich spürbar negativ auf die Herstellungskosten strukturell komplizierter Fahrwerks-komponenten mit hochvariablen funktionellen Eigenschaften aus.

Hiervon ausgehend liegt der Erfindung die Aufgabe zugrunde, ein Verfahren zur Herstellung eines Lenkerbauteils für Radaufhängungen von Kraftfahrzeugen aufzuzeigen, bei welchem es möglich ist, Stahlwerkstoffe mit hohen Festigkeiten und geringer Duktilität zu verwenden, aber gleichzeitig strukturell komplizierte Lenkerbauteile geschaffen werden können. Des Weiteren soll ein Lenkerbauteil mit diesen Eigenschaften aufgezeigt werden.

Der verfahrensmäßige Teil der Aufgabe wird durch die Maßnahmen des Patentanspruchs 1 gelöst. Ein Lenkerbauteil mit den Merkmalen im Patentanspruch 7 löst den gegenständlichen Teil der Aufgabenstellung.

Vorteilhafte Weiterbildungen des Erfindungsgedankens sind Gegenstand der Unteransprüche.

Bei dem erfindungsgemäßen Verfahren zur Herstellung eines Lenkerbauteils für Radaufhängungen von Kraftfahrzeugen ist vorgesehen, dass ein Schalenkörper in einem Blechumformverfahren hergestellt wird, welcher mehrere von einem Mittelsteg in die gleiche Richtung ausgestellte Flankenbereiche aufweist. Der Schalenkörper selbst besteht aus einem Stahlwerkstoff mit einer Zugfestigkeit von mindestens 800 MPa. Ein solcher hochfester Stahlwerkstoff besitzt ein sehr geringes Duktilitätspotential und dient lediglich als tragendes Gerüst für die Flankenbereiche verbindende Gitteraussteifungen aus Kunststoff. Wesentlich bei dem erfindungsgemäßen Verfahren ist die Kombination von hochfesten Materialien mit Gitteraussteifungen aus Kunststoff, wobei sich insgesamt Lenkerbauteile mit hinreichend hoher Festigkeit, aber gleichzeitig verringertem Gewicht ergeben. Der Schalenkörper wird aus relativ einfachen und insbesondere minimal umgeformten Ausgangselementen aus hoch- bis ultrahochfesten Stahlwerkstoffen hergestellt und bildet bei bewusst einfacher Geometrie und möglichst geringen Umformgraden das tragende Skelett für die zumindest bereichsweise vorgesehenen Gitteraussteifungen. Erst durch die Kombination eines hochfesten Stahlwerkstoffs mit demgegenüber relativ weichen Gitteraussteifungen aus Kunststoff wird ein Lenkerbauteil zu seiner vollen Geometrie und Endfunktionalität komplettiert.

Zum Einsatz kommen Stahlwerkstoffe mit einer Zugfestigkeit von mindestens 800 MPa. Selbstverständlich können auch höchstfeste Stahlwerkstoffe mit einer Zugfestigkeit von mindestens 1000 MPa oder sogar über 1200 MPa zum Einsatz kommen. Durch die Reduzierung des Umformgrads wird der geringen Duktilität dieser Werkstoffe Rechnung getragen, wobei eine nachfolgende Wärmebehandlung, beispielsweise zur Erreichung einer Endhärte, entfallen kann. Daher können die Gitteraussteifungen ohne nachfolgende Wärmebehandlung des umgeformten Schalenkörpers mit diesem verbunden werden. Hierzu können die Gitteraussteifungen als separates Bauteil vorgefertigt werden und in einem separaten Verbindungsschritt mit dem Schalenbauteil gekoppelt werden. Als separater Verbindungsabschnitt ist z.B. ein einclipsen der Gitteraussteifungen an dem Schalenkörper denkbar.

Selbstverständlich können die Gitteraussteifungen auch unmittelbar an den Schalenkörper angespritzt werden. In bekannter Weise können hierzu Durchbrüche an dem Schalenkörper vorgesehen sein, die von dem Kunststoff der Gitteraussteifungen durchsetzt werden, um die Gitteraussteifungen formschlüssig mit den Flankenbereichen des Schalenkörpers zu koppeln.

Grundsätzlich können die Gitteraussteifungen auch als separates Bauteil über ein Spritzgussverfahren mit dem Schalenbauteil gekoppelt werden. Bei diesem Spritzgussverfahren wird nicht die Gitteraussteifung selbst hergestellt, sondern es wird lediglich die Verbindung zwischen dem Schalenkörper und den Gitteraussteifungen geschaffen. Es ist auch möglich, die Gitteraussteifung klebetechnisch an dem Schalenkörper zu fixieren.

Hinsichtlich der Materialwahl und konkreten Formgebung spielen primär die zu erwartenden Spannungsverläufe innerhalb des Lenkerbauteils eine Rolle. Als Werkstoff für den Kunststoff ist insbesondere Polyamid geeignet, insbesondere auch mit Glasfaserverstärkung, z.B. PA6GF. Wesentlich ist, dass nicht nur der Schalenkörper die Aufgabe hat, Biege- und Torsionsmomente aufzunehmen, sondern vielmehr auch die Gitteraussteifungen trotz des relativ weichen Kunststoffs einen wesentlichen Einfluss auf das Gesamtsteifigkeitsverhalten haben, insbesondere was die Fähigkeit betrifft, Biege- und Torsionselemente aufzunehmen. Aus diesem Grund ist vorgesehen, die sich gegenüber liegenden Flankenbereiche des Schalenkörpers über die Gitteraussteifungen miteinander zu verbinden, auch um den im Querschnitt quasi U-förmig profilierten Schalenkörper durch die Gitteraussteifungen zumindest partiell mit Verstrebungen zu versehen, die aus mechanischer Sicht aus einem offenen Profil ein geschlossenes Profil machen. Ziel ist es, ein möglichst leichtes und formstabiles Lenkerbauteil zu schaffen.

Dadurch, dass bei der Herstellung des Lenkerbauteils nicht nur ein Blechumformverfahren durchgeführt wird, sondern beim Anspritzen des Schalenkörpers die Möglichkeit besteht, angrenzende Komponenten in diesem Fertigungsschritt mit dem Schalenkörper zu verbinden, ist vorgesehen, dass beispielsweise Profilbauteile an dem Schalenkörper angeordnet werden, die aus einem anderen Material bestehen als die Gitteraussteifungen. Diese können gleichzeitig während des Anspritzens der Gitteraussteifungen umspritzt werden und so mit dem Schalenkörper verbunden werden. Wenn die Profilbauteile aus dem gleichen Material bestehen wie die Gitteraussteifungen, können diese unmittelbar beim Anspritzen der Gitteraussteifungen mit ausgeformt werden.

Um den Schalenkörper vor Steinschlag zu schützen, kann dieser zusätzlich zur Gitteraussteifung mit einer seine Oberfläche zumindest bereichsweise bedeckenden Deckschicht aus Kunststoff versehen sein. Hierzu kann der Kunststoff der Gitteraussteifungen zum Einsatz kommen. Grundsätzlich sind aber auch andere Kunststoffe, insbesondere solche mit geringerer Festigkeit, wie z.B. Polypropylen (PP) verwendbar.

Gegenstand des Patentanspruchs 7 ist ein Lenkerbauteil für Radaufhängungen von Kraftfahrzeugen, bei welchem ein in einem Blechumformverfahren hergestellter Schalenkörper mehrere von einem Mittelsteg in die gleiche Richtung ausgestellte Flankenbereiche aufweist. Der Schalenkörper besteht aus einem Werkstoff mit einer Zugfestigkeit von mindestens 800 MPa. Die Flankenbereiche des Schalenkörpers sind über Gitteraussteifungen aus Kunststoff miteinander verbunden. Der Schalenkörper kann auch höhere Zugfestigkeiten von über 1200 MPa aufweisen. Die Gitteraussteifungen sind vorzugsweise an den Schalenkörper angespritzt.

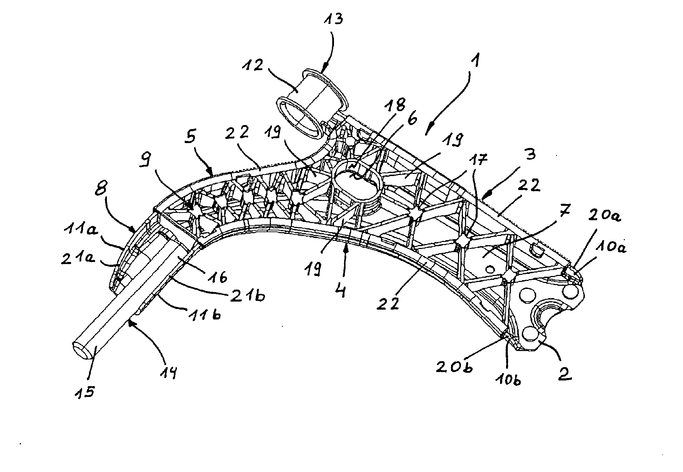

Die Erfindung wird nachfolgend anhand des in der Figur dargestellten Ausführungsbeispiels näher erläutert. Die Figur zeigt als Lenkerbauteil für Radaufhängungen von Kraftfahrzeugen exemplarisch einen Hinterachsträger.

Das Lenkerbauteil 1 ist in einer angenäherten L-Form ausgebildet und weist drei Lagerabschnitte auf. Das in der Bildebene rechte Ende bildet einen ersten Lagerabschnitt 2, der mit einer nicht näher dargestellten Pfanne einer Kugelkupplung zur Verbindung mit einem Nabenträger eines Straßenrades des Kraftfahrzeugs verbunden wird. Der erste Lagerabschnitt 2 ist Teil eines Vorderarms 3, der über einen Zwischenabschnitt 4 einstückig mit einem Hinterarm 5 verbunden ist. In dem Zwischenabschnitt 4 befindet sich ein Durchgangsloch 6, das den sich vom Vorderarm 3 bis zum Hinterarm 5 erstreckenden Mittelsteg 7 durchsetzt.

Das Lenkerbauteil 1 ist ein Hybridbauteil, das aus einem Schalenkörper aus hoch- oder höchstfestem Stahl mit einer Zugfestigkeit von mindestens 800 MPa durch Blechumformung umfasst. Mit diesem Schalenkörper 8 sind Gitteraussteifungen 9 verbunden. Der Schalenkörper 8 besteht aus einem Mittelsteg 7 und sich hieran anschließende Flankenbereiche 10a, 10b, 11a, 11 b des Vorderarms 3 sowie des Hinterarms 5. Die Flankenbereiche 10a, 10b, 11a, 11 b erstrecken sich auch über den Zwischenabschnitt 4 und gehen fließend ineinander über. Die Flankenbereiche 10a, 11a des Vorderarms 3 und des Hinterarms 5 sind mit einer metallischen Zylinderhülse 12 verbunden, die den zweiten Lagerabschnitt 13 bildet. Über diesen zweiten Lagerabschnitt 13 wird das Lenkerbauteil 1 schwenkbeweglich an der Kraftfahrzeugkarosserie befestigt. Der dritte Lagerabschnitt 14 ist endseitig des Hinterarms 5 durch einen Lagerzapfen 15 ausgebildet, der über den Schalenkörper 8 im Bereich des Hinterarms 5 vorsteht.

Die dargestellte Gitteraussteifung 9 erstreckt sich vom in dem Schalenkörper 8 liegenden Ende 16 des Lagerzapfens 15 über den gesamten Hinterarm 5, den Zwischenabschnitt 4 bis in den Vorderarm 3 hinein. Die Gitteraussteifungen 9 sind Kreuzverrippungen, wobei ihre Knotenpunkte 17 im mittleren Bereich zwischen den jeweiligen Flankenbereichen 10a, 10b des Vorderarms 3 bzw. zwischen den Flankenbereichen 11a, 11 b des Hinterarms 5 angeordnet sind. Auf der gedachten Mittellinie zwischen den Flankenbereichen 10a, 10b, 11a, 11b sind die Knotenpunkte 17 im Bereich des Hinterarms 5 in geringerem Abstand zueinander positioniert als im Vorderarmabschnitt 3, wo der gegenseitige Abstand zweier Knotenpunkte etwa doppelt so groß gewählt ist. Die Steifigkeit der Gitteraussteifung 9 ist daher im Bereich des Hinterarms 5 größer als im Bereich des Vorderarms 3.

Das Durchgangsloch 6 im Zwischenabschnitt 4 besitzt die Kontur eines Langlochs mit geringer Längserstreckung und weist eine Wandung 18 auf, die Bestandteil der Gitteraussteifung 9 ist. Mehrere Streben 19 erstrecken sich sowohl von den Flankenbereichen 10a, 10b des Vorderarms 3 als auch von den Flankenbereichen 11 a, 11 b des Hinterarms zur Wandung 18 des Durchgangslochs 6. Über die Wandung 18 des Durchgangslochs 6 werden Kräfte auf angeschlossene Streben 19 übertragen. In der Wandung 18 liegen mehrere Knotenpunkte der an die Wandung 18 angeschlossenen Streben 19. Die Wandung 18 kann an eine randseitige Ausstülpung des Durchgangslochs 6 angeschlossen, insbesondere angespritzt, sein.

Es ist zu erkennen, dass die in der Bildebene oberen Längskanten 20a, 20b der Flankenbereiche 10a, 10b sowie die Längskanten 21 a, 21 b der Flankenbereiche 11a, 11b von den Gitteraussteifungen 9 umgriffen sind. Hierzu ist an der Gitteraussteifung 9 ein verdickter Randbereich 22 ausgebildet, der die Längskanten 20a, 20b, 21 a, 21 b übergreift.

### Bezugszeichen:

- 1 -: Lenkerbauteil
- 2 -: erster Lagerabschnitt
- 3 -: Vorderarm
- 4 -: Zwischenabschnitt
- 5 -: Hinterarm
- 6 -: Durchgangsloch in 4
- 7 -: Mittelsteg v. 8
- 8 -: Schalenkörper
- 9 -: Gitteraussteifung
- 10a: -Flankenbererich
- 10b: -Flankenbereich
- 11a: -Flankenbereich
- 11 b: -Flankenbereich
- 12 -: Zylinderhülse
- 13 -: zweiter Lagerabschnitt
- 14 -: dritter Lagerabschnitt
- 15 -: Lagerzapfen
- 16 -: Ende v. 15
- 17 -: Knoten
- 18 -: Wandung v. 6
- 19 -: Strebe
- 20a -: Längskante v. 10a
- 20b -: Längskante v. 10b-
- 21a-: Längskante v. 11a
- 21b: Längskante v. 11b
- 22: Randbereich v. 9

## Patentansprüche

1. Verfahren zur Herstellung eines Lenkerbauteils für Radaufhängungen von Kraftfahrzeugen bei welchem ein Schalenkörper (8) in einem Blechumformverfahren hergestellt wird, welcher mehrere von einem Mittelsteg (7) in die gleiche Richtung ausgestellte Flankenbereiche (10a, 10b; 11 a, 11 b) aufweist, wobei die Flankenbereiche (10a. 10b; 11 a, 11 b) über Gitteraussteifungen (9) aus Kunststoff miteinander verbunden werden, **dadurch gekennzeichnet, dass** der Schalenkörper (8) aus einem Stahlwerkstoff mit einer Zugfestigkeit von mindestens 800 MPa gefertigt wird, wobei die Gitteraussteifungen (9) ohne nachfolgende Wärmebehandlung des ungeformten Schalenkörpers (8) mit dem Schalenkörper (8) verbunden werden.

2. Verfahren nach Anspruch 1, **dadurch gekennzeichnet, dass** der Schalenkörper aus einem Stahlwerkstoff mit einer Zugfestigkeit von mindestens 1200 MPa gefertigt wird.

3. Verfahren nach Anspruch 1 oder 2, **dadurch gekennzeichnet, dass** die Gitteraussteifungen (9) als separates Bauteil vorgefertigt werden und in einem Verbindungsschritt mit dem Schalenkörper (8) gekoppelt werden.

4. Verfahren nach Anspruch 1 oder 2, **dadurch gekennzeichnet, dass** die Gitteraussteifungen (9) an den Schalenkörper (8) angespritzt werden.

5. Verfahren nach Anspruch 4, **dadurch gekennzeichnet, dass** vor dem Anspritzen der Gitteraussteifungen (9) Profilbauteile an dem Schalenkörper (8) angeordnet werden, die aus einem anderem Material bestehen als die Gitteraussteifungen (9) und die durch das Anspritzen der Gitteraussteifungen (9) fixiert werden.

6. Verfahren nach Anspruch 4 oder 5, **dadurch gekennzeichnet, dass** mit dem Anspritzen der Gitteraussteifungen (9) Profilbauteile angespritzt werden.

7. Lenkerbauteil für Radaufhängungen von Kraftfahrzeugen, bei welchem ein in einem Blechumformverfahren hergestellter Schalenkörper (8) mehrere von einem Mittelsteg (7) in die gleiche Richtung ausgestellte Flankenbereiche (10a, 10b; 11a, 11b) aufweist, wobei die Flankenbereiche (10a, 10b; 11a, 11b) über Gitteraussteifungen (9) aus Kunststoff miteinander verbunden sind, **dadurch gekennzeichnet, dass** der Schalenkörper (8) aus einem Stahlwerkstoff mit einer Zugfestigkeit von mindestens 800 MPa besteht, wobei der Schalenkörper (8) einen Vorderarm (3) und einen Hinterarm (5) aufweist, wobei die Steifigkeit der Gitteraussteifung (9) im Bereich des Hinterarms (5) größer ist als im Bereich des Vorderarms (3).

8. Lenkerbauteil nach Anspruch 7, **dadurch gekennzeichnet, dass** der Schalenkörper (8) aus einem Stahlwerkstoff mit einer Zugfestigkeit von 1200 MPa gefertigt wird.

9. Verfahren nach Anspruch 7 oder 8, **dadurch gekennzeichnet, dass** die Gitteraussteifungen (9) an den Schalenkörper (8) angespritzt sind.

## Claims

1. Method of manufacture of a steering component for wheel suspensions of motor vehicles in which a shell body (8), which is produced in a metal pressing process, has several flank areas (10a, 10b; 11 a, 11 b) extending from a middle web (7) in the same direction, whereby the flank areas (10a, 10b; 11 a, 11 b) are connected to each other via grid stiffeners (9) made of plastic, **characterised in that** the shell body (8) is produced from a steel material with a tensile strength of at least 800 MPa, while the grid stiffeners (9) are joined to the shell body (8) without subsequent heat treatment of the unformed shell body (8).

2. Method according to claim 1, **characterised in that** the shell body is produced from a steel material with a tensile strength of at least 1200 MPa.

3. Method according to claim 1 or 2, **characterised in that** the grid stiffeners (9) are pre-fabricated as a separate component and are coupled with the shell body (8) in a bonding step.

4. Method according to claim 1 or 2, **characterised in that** the grid stiffeners (9) are moulded onto the shell body (8).

5. Method according to claim 4, **characterised in that** before the grid stiffeners (9) are moulded on, profile components which are made from a different material than the grid stiffeners (9) and which are fixed by the moulding-on of the grid stiffeners (9) are arranged on the shell body (8).

6. Method according to claim 4 or 5, **characterised in that** profile components are moulded on with the moulding-on of the grid stiffeners (9).

7. Steering component for wheel suspensions of motor vehicles, in which a shell body (8) which is produced in a metal pressing process has several flank areas (10a, 10b; 11 a, 11 b) extending from a middle web (7) in the same direction, whereby the flank areas (10a, 10b; 11 a, 11 b) are connected to each other via grid stiffeners (9) made of plastic, **characterised in that** the shell body (8) is produced from a steel material with a tensile strength of at least 800 MPa, the shell body (8) having a front arm (3) and a rear arm (5), the rigidity of the grid stiffener (9) being greater in the area of the rear arm (5) than in the area of the front arm (3).

8. Steering component according to claim 7, **characterised in that** the shell body (8) is produced from a steel material with a tensile strength of 1200 MPa.

9. Method according to claim 7 or 8, **characterised in that** the grid stiffeners (9) are moulded onto the shell body (8).

## Revendications

1. Procédé pour la fabrication d'un composant en forme de bras pour des suspensions de roues de véhicules automobiles, dans lequel on réalise un corps en forme de coque (8) dans un procédé à déformation de tôle, ledit corps comprenant plusieurs zones de flanc (10a, 10b ; 11a, 11b) dressées dans la même direction depuis une barrette centrale (7), lesdites zones de flanc (10a, 10b ; 11a, 11b) étant reliées les unes aux autres via des éléments de rigidification grillagés (9) en matière plastique,
**caractérisé en ce que** le corps en forme de coque (8) est fabriqué en un matériau à base d'acier ayant une résistance à la traction d'au moins 800 MPa, les éléments de rigidification grillagés (9) étant reliés au corps en forme de coque (8) sans traitement thermique postérieur du corps en forme de coque (8) déformé.

2. Procédé selon la revendication 1, **caractérisé en ce que** le corps en forme de coque est fabriqué en un matériau à base d'acier ayant une résistance à la traction d'au moins 1 200 MPa.

3. Procédé selon la revendication 1 ou 2, **caractérisé en ce que** les éléments de rigidification grillagés (9) sont préfabriqués comme des composants séparés et sont couplés au corps en forme de coque (8) dans une étape de liaison.

4. Procédé selon la revendication 1 ou 2, **caractérisé en ce que** les éléments de rigidification grillagés (9) sont réalisés par enrobage sur le corps en forme de coque (8).

5. Procédé selon la revendication 4, **caractérisé en ce qu'**avant l'enrobage des éléments de rigidification grillagés (9), des composants profilés sont agencés contre le corps en forme de coque (8), qui sont constitués d'un autre matériau que les éléments de rigidification grillagés (9) et qui sont fixés par l'enrobage des éléments de rigidification grillagés (9).

6. Procédé selon la revendication 4 ou 5, **caractérisé en ce que** les composants profilés sont enrobés avec l'enrobage des éléments de rigidification grillagés (9).

7. Composant en forme de bras pour des suspensions de roues de véhicules automobiles, dans lequel un corps en forme de coque (8) fabriqué par un procédé de déformation de tôle comprend plusieurs zones de flanc (10a, 10b ; 11a, 11b) dressées dans la même direction depuis une barrette centrale (7), dans lequel les zones de flanc (10a, 10b ; 11a, 11b) sont reliées les unes aux autres via des éléments de rigidification grillagés (9) en matière plastique,
**caractérisé en ce que** le corps en forme de coque (8) est en un matériau à base d'acier ayant une résistance à la traction d'au moins 800 MPa, et le corps en forme de coque (8) comprend un bras avant (3) et un bras arrière (5), la rigidité de l'élément de rigidification grillagé (9) dans la zone du bras arrière (5) étant supérieure à celle dans la zone du bras avant (3).

8. Composant en forme de bras selon la revendication 7, **caractérisé en ce que** le corps en forme de coque (8) est fabriqué en un matériau à base d'acier ayant une résistance à la traction de 1 200 MPa.

9. Composant selon la revendication 7 ou 8, **caractérisé en ce que** les éléments de rigidification grillagés (9) sont enrobés sur le corps en forme de coque (8).
